# EUROPEAN PATENT APPLICATION

(11) **EP 1 038 760 A2**
(43) Date of publication of application: **27.09.2000**
(21) Application number: 00301886.8
(22) Date of filing: 08.03.2000
(51) Int. Cl.: B62D 25/14, B62D 27/02

(54) **Motor vehicle assembly**

(30) Priority: 26.03.1999 GB 9906903
(71) Applicant: Rover Group Limited, Warwick CV34 6RG (GB)
(72) Inventor: Mellor, Michael, Coleshill, Birmingham B46 3EX (GB); Pitchford, Neil John, Warwick CV34 4JD (GB); Hirons, Garry, Tamworth, Staffordshire B79 8HX (GB); Perks, John, Sutton Coldfield, West Midlands B73 6SX (GB)
(74) Representative: Schernhammer, Herbert

(57) **Abstract**

A motor vehicle assembly is disclosed in which a bulkhead assembly 2 is secured to a vehicle body 20 having an aperture 26. The bulkhead assembly 2 includes a channel 6 about a periphery thereof. A bead 50 of an adhesive or sealant is provided in the channel 6. The vehicle body comprises a flange 38 to at least one edge of the aperture. The bulkhead assembly is secured to the body by engagement of the flange 38 within the bead 50 of adhesive or sealant within the channel 6. This has the advantage that since the bead of adhesive or sealant is located within the channel 6, there is a reduced risk of the sealant or adhesive being wiped or smeared during assembly. Also, the bulkhead assembly 2 is readily located relative to the body 20 by the interaction of the flange and the channel.

## Description

The present invention relates to a motor vehicle assembly, and to a method of construction of the motor vehicle assembly.

It is known to construct a motor vehicle assembly comprising a body having an aperture between a passenger cell and an engine compartment and a bulkhead panel for location between the passenger cell and the engine compartment. According to the known method, the bulkhead panel is provided with a bead of adhesive or sealant about a periphery thereof. The bulkhead panel is then moved into a suitable location and placed into position adjacent to the body. The panel may then be more permanently secured to the body by fasteners.

This method has a number of disadvantages. Firstly, the adhesive or sealant may become smeared or wiped as the bulkhead panel is moved into the suitable location. Also, the adhesive or sealant is smeared and wiped between the bulkhead panel and the body as the panel is placed into position adjacent to the body. Finally, the bulkhead panel must be held in position while the fasteners are put into position and applied to secure the bulkhead panel to the body or further smearing and wiping of the adhesive or sealant may occur. Smearing or wiping of the adhesive or sealant may adversely affect the integrity of the join or seal between the bulkhead panel and the body.

It is an advantage of the present invention that it substantially reduces or eliminates these problems.

According to a first aspect of the present invention, a motor vehicle assembly comprising a body having an aperture between a passenger cell and an engine compartment and a bulkhead assembly for location between the passenger cell and the engine compartment to close the passenger cell from the engine compartment, is characterised in that the bulkhead assembly comprises a channel about a periphery thereof in which is located an adhesive, sealant or gasket, in that the body further comprises a flange along at least one edge of the aperture and in that bulkhead assembly is secured relative to the body by interaction of the flange within the adhesive, sealant or gasket within the channel.

According to a second aspect of the invention, a method of securing a bulkhead assembly comprising a channel about a periphery thereof to a vehicle body comprising an aperture between a passenger cell and an engine compartment and a flange along at least one edge of the aperture comprises the steps of:
providing an adhesive, sealant or gasket in the bulkhead assembly channel,
introducing the bulkhead assembly into the vehicle body, and
placing the bulkhead assembly against the vehicle body, such that the flange interacts with the adhesive, sealant or gasket in the bulkhead assembly channel.

This has the advantage that since the adhesive or sealant is located within the channel, there is a reduced risk of the sealant or adhesive being wiped or smeared when the assembly is introduced into the vehicle body. Also, since the bulkhead assembly is located relative to the body by the interaction of the flange and the channel, there is a reduced risk of wiping or smearing by subsequent movement of the bulkhead assembly and the body once the bulkhead assembly has been placed adjacent to the body. In the case where a gasket is located within the channel, the gasket is conveniently held in a desired location without the need for further securing means.

Preferably, the assembly is introduced into the vehicle body through door apertures provided in the vehicle body.

The assembly may be more permanently fixed and more precisely located by providing a plurality of openings about both the vehicle aperture and the assembly periphery, these openings being placed in register to enable fasteners to pass therethrough. This has the advantage that the adhesive, sealant or gasket locates the assembly in position or substantially in position to enable the assembly to be secured to the body without the need for further supporting apparatus.

Preferably, the channel is defined by a central portion of the assembly extending from an upper edge of a first channel wall, a channel base extending from a lower edge of the first channel wall to a lower edge of a second channel wall, and a flange extending from an upper edge of the second channel wall, the second channel wall being of lesser dimensions than the first channel wall. This means that the flange is offset from the body of the assembly. This geometry of the channel means that the adhesive or sealant is not squeezed out of the channel when the channel is placed over the at least one flange. This geometry of the channel also serves to protect a gasket located within the channel from damage.

The present invention will now be described, by way of example only, with reference to the accompanying drawings, in which:
Figure 1 shows a perspective view of various components of a motor vehicle assembly according to the present invention prior to assembly;
Figure 2 shows a section through a motor vehicle assembly according to the present invention after assembly;
Figure 3 shows diagramatically a section through components of a second embodiment of the invention; and
Figure 4 shows a view similar to that of Figure 3.

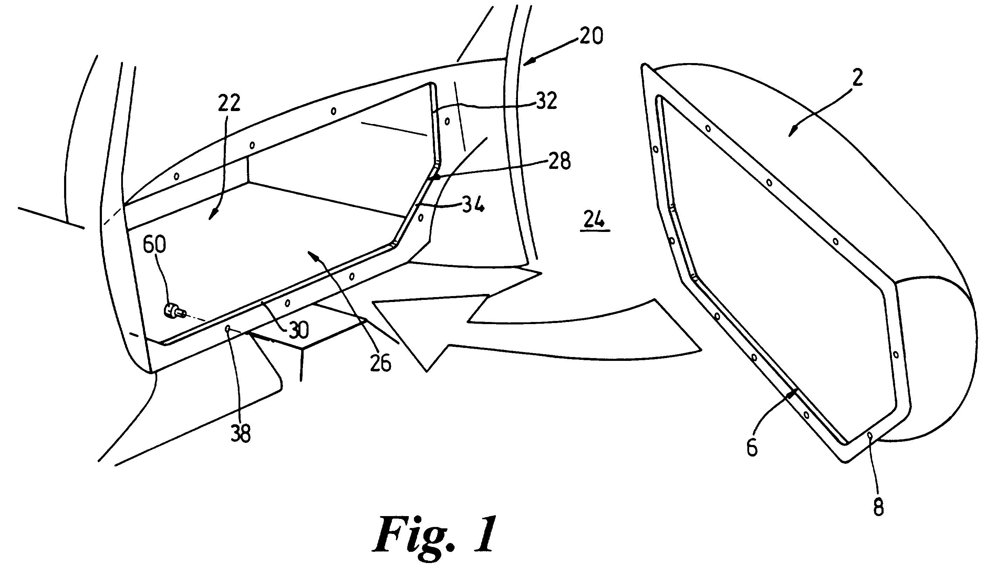

Referring to first to Figure 1 there are shown various components of a motor vehicle assembly. A bulkhead assembly 2 is shown. The bulkhead assembly may conveniently comprise a single bulkhead panel or a cockpit module. A channel 6 is provided about a periphery of the bulkhead assembly. A plurality of first openings 8 are also provided about the periphery, located outwardly of the channel 6.

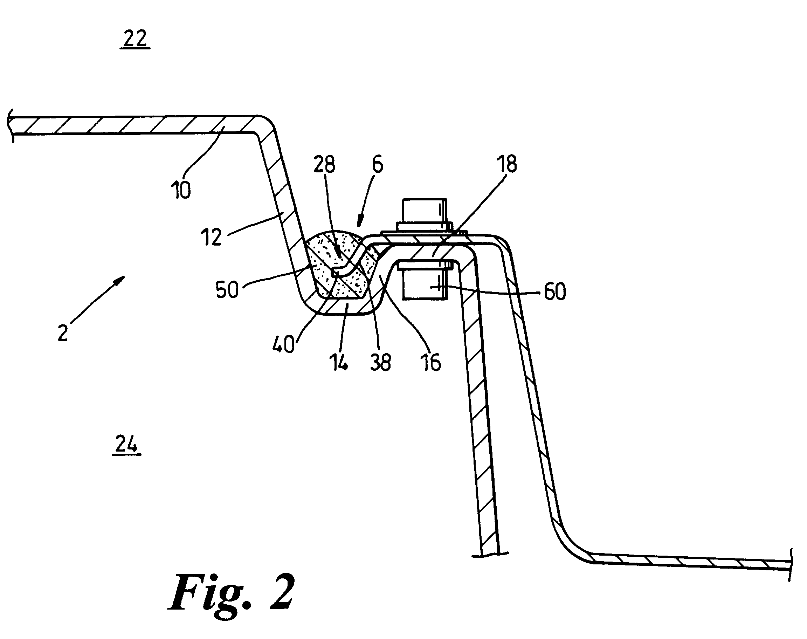

Referring to Figure 2 it can be seen that the channel 6 is defined by a central portion 10 of the bulkhead assembly extending from an upper edge of an inner channel wall 12, a channel base 14 extending from a lower edge of the inner channel wall 12 to a lower edge of an outer channel wall 16, and an outwardly directed portion 18 extending away from an upper edge of the outer channel wall 16, the outer channel wall 16 preferably being of lesser dimensions than the inner channel wall 12.

A front portion of a vehicle body 20 is also shown in Figure 1. An engine compartment 22 is located forwardly of a passenger cell 24. An aperture 26 is provided in the vehicle body between the engine compartment 22 and the passenger cell 24. A rearwardly directed flange 28 is provided, in the illustrated embodiment, along three edges of the aperture.

The flange 28 extends horizontally along a first lower edge 30 of the aperture, vertically along a second side edge 32 of the aperture and obliquely along a third edge 34 of the aperture which joins the first edge to the second edge.

A plurality of second openings 38 are provided about the vehicle body and are located about the aperture 26 outwardly of the flange 28.

The flange may be of any suitable shape. One such configuration of the flange is shown in Figure 2. The flange 28 comprises a first portion 38 extending rearwardly of the vehicle body assembly, into the passenger cell 24. A lateral portion 40 extends from a remote end of the first portion. The lateral portion 40 in use is located within the channel 6 in the bulkhead assembly.

A method of joining the bulkhead assembly to the vehicle body will now be described. A bead 50 of an adhesive or sealant is introduced into the channel 6 in the bulkhead assembly. This operation may conveniently be carried out by a suitable automated machine programmed for this task.

The bulkhead assembly 2 is then introduced into the vehicle body 20. This may conveniently be done by passing the assembly through door apertures provided in the vehicle body. The bulkhead assembly is then placed against the vehicle body, as indicated by the arrow in Figure 1, such that the offset portion 40 of the flange 28 enters the bead 50 of adhesive or sealant provided in the channel 6 in the bulkhead assembly.

The flange 28 serves to support and to locate the bulkhead assembly with respect to the vehicle body in both horizontal and vertical directions. The geometry of the channel 6 means that the bead 50 of adhesive or sealant is not squeezed out of the channel 6 when the channel is placed over flange 38.

Final positioning of the bulkhead assembly 2 may be achieved by inserting fasteners 60 through the plurality of first and second openings 8,38 in the bulkhead assembly 2 and the vehicle body 20 and securing the fasteners in position. The first and second openings should already be aligned or substantially aligned with one another due to the interaction of the flange 28 and the channel 6.

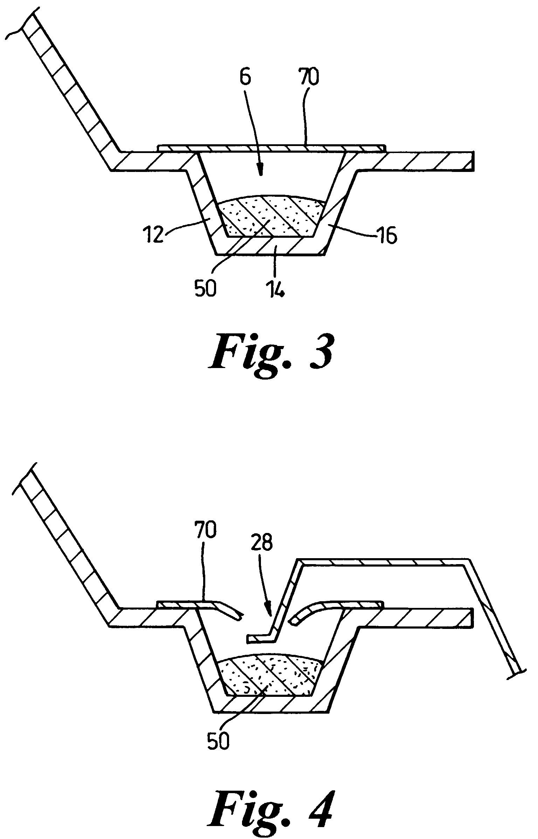

A further embodiment of the invention is illustrated with reference to Figures 3 and 4. A channel 6 is shown. In the illustrated embodiment, the channel 6 is defined by a channel base 14 extending between a lower edge of a first channel wall 12 and a lower edge of a second channel wall 16. The channel walls are of substantially equal dimensions. A protective membrane or film 70 extends across a top of the channel to seal the channel. A bead 50 of adhesive or sealant or a gasket is located within the sealed channel.

The adhesive, sealant or gasket is placed in the channel prior to sealing of the channel. The protective film or membrane 70 may be secured to the bulkhead assembly by any convenient means. For example, where the bulkhead assembly comprises a plastics panel, a plastics protective film may be heat welded to the plastics panel.

The protective film or membrane serves to further protect the adhesive, sealant or gasket from damage or contamination prior to assembly. For example in the case of an adhesive or sealant, the sealant or adhesive will have only a limited opportunity to cure and also will be protected from contamination during handling of the bulkhead assembly.

It will be appreciated that sealing of the channel in this way will mean that the adhesive, sealant or gasket may be introduced to the channel at a time or location or both separate to that where the bulkhead assembly is to be secured to the vehicle body, for example during manufacture of the bulkhead assembly and prior to shipping to an assembly plant.

In use, when the bulkhead assembly is placed against the vehicle body such that an offset portion of a flange 28 is to enter the channel, the flange 28 will cause the protective film or membrane to puncture or rupture. The flange will then pass into the channel either to enter the bead 50 of adhesive or sealant or to engage with a gasket provided in the channel 6 in the bulkhead assembly.

It will be understood that the protective film or membrane may take the form of or be secured to the bulkhead assembly by a releasable adhesive tape. The tape is applied once the gasket, sealant or adhesive has been located within the channel. The tape is removed to expose the gasket, sealant or adhesive when the bulkhead assembly is required for fitting to the vehicle body, such that the flange may interact with the gasket, sealant or adhesive located within the channel.

## Claims

1. A motor vehicle assembly comprising a vehicle body (20) having an aperture (26) between a passenger cell (24) and an engine compartment (22) and a bulkhead assembly (2) for location between the passenger cell (24) and the engine compartment (22), characterised in that the bulkhead assembly (2) comprises a channel (6) about a periphery thereof in which is located an adhesive, a sealant or a gasket, in that the body (20) further comprises a flange (28) along at least one edge of the aperture (26) and in that the body (20) is secured to the bulkhead assembly (2) by interaction of the flange (28) with the adhesive, sealant or gasket within the channel (6).

2. An assembly according to claim 1, characterised in that the channel (6) is defined by a central portion (10) of the assembly (2) extending from an upper edge of an inner channel wall (12), a channel base (14) extending from a lower edge of the inner channel wall (12) to a lower edge of an outer channel wall (16), and a flange (18) extending from an upper edge of the outer channel wall (16), the outer channel wall (16) being of lesser dimensions than the inner channel wall (12).

3. An assembly according to claim 1 or claim 2, characterised in that a protective film or membrane (70) extends across the channel (6) to seal the channel (6).

4. An assembly according to any previous claim, characterised in that a number of openings (38) are provided about both the vehicle aperture (26) and the assembly periphery, through which pass fasteners (60).

5. A method of securing a bulkhead assembly (2) comprising a channel (6) about a periphery thereof to a vehicle body (20) comprising an aperture (26) between a passenger cell (24) and an engine compartment (22) and a flange (28) along at least one edge of the aperture (26) comprising the steps of:
providing an adhesive, sealant or gasket in the bulkhead assembly channel (6),
introducing the bulkhead assembly (2) into the vehicle body (20), and
placing the bulkhead assembly (2) against the vehicle body (20), such that the flange (28) interacts with the adhesive, sealant or gasket in the bulkhead assembly channel (6).

6. A method according to claim 5, characterised in that the assembly is introduced into the vehicle body (20) through door apertures provided in the vehicle body (20).

7. A method according to claim 5 or claim 6, characterised in that a film or membrane (70) on the bulkhead assembly (2) and covering the channel (6) is removed prior to placing of the bulkhead assembly (2) against the vehicle body (20).

8. A method according to claim 5 or claim 6, characterised in that the flange (28) ruptures a film or membrane (70) covering the bulkhead assembly channel (6), prior to interaction with the adhesive, sealant or gasket in the bulkhead assembly channel (6).

9. A method according to any of claims 5 to 8, in which a number of openings (38) are provided about both the vehicle aperture and the assembly periphery, characterised in that fasteners (60) are provided to pass through the openings (38) to secure the assembly (2) to the body (20).
